# EUROPEAN PATENT SPECIFICATION

(11) **EP 0 507 979 B1**
(45) Date of publication and mention of the grant of the patent: **04.09.1996**
(21) Application number: 91105852.7
(22) Date of filing: 12.04.1991
(51) Int. Cl.: B65G 1/02, B65G 1/04, A47B 47/02, A47B 57/40

(54) **Rack assembly**
Lagergestell
Système d'emmagasinage

(43) Date of publication of application: 14.10.1992
(73) Proprietor: DAIFUKU CO., LTD., Osaka 555 (JP)
(72) Inventor: Asano, Teruro, c/o Daifuku Co., Ltd., Hino-cho, Gamo-gun, Shiga-ken (JP); Nobukawa, Shunji, c/o Daifuku Co., Ltd., Komaki-shi, Aichi-ken (JP); Taniguchi, Etsuo, c/o Daifuku Co., Ltd., Hino-cho, Gamo-gun, Shiga-ken (JP); Yokota, Tetsuro c/o Daifuku Co., Ltd., Hino-cho, Gamo-gun Shiga-ken (JP)
(74) Representative: Le Vrang, Klaus

(56) References cited:
- BE-A- 901 929
- DE-A- 2 404 340
- DE-U- 8 703 863
- US-A- 3 323 655
- US-A- 3 589 535

## Description

### FIELD OF THE INVENTION

The present invention relates to rack assemblies such as racks adapted to he installed in factories for the convenience of loading and unloading operations by forklift trucks and those for use in automatic warehousing facilities.

### BACKGROUND OF THE INVENTION

Rack assemblies adapted for the convenience of loading and unloading operations by forklift trucks of goods handling devices employed in automatic warehousing facilities have been known which are of the type having a plurality of support posts arranged in spaced apart relation, both depthwise and transversely of the rack assembly, bracings and longitudinal beams for interconnecting the depthwise disposed support posts so as to securely fix them together, and transverse beams for interconnecting the transversely disposed support posts. Brackets project from each adjacent pair of the transversely disposed support posts at opposed positions, and bracket rails extend between the brackets of each adjacent two depthwise disposed support posts for supporting goods placed in the rack assembly.

In such known rack assembly, the brackets are composed of the same material and painted the same color as of the support posts. Because of this, recognition of the scale of the rack, for example the number of tiers of the rack, is hard. Likewise, visual recognition is hard even if forks of forklift trucks or handling arms of goods handling device touch the rack as they are operated to move in and out of the said, and it is hard to easily and accurately adjust the level of forks of forklift trucks to the level of the rack. Furthermore, even if goods placed in the rack happen to slide, it is unrecognizable.

The US-A 3,323,655 describes a rack assembly of the above mentioned kind consisting of upright posts and horizontal rails. In order to fix the rails to the posts there are provided brackets having a vertical portion adjacent the post, and a horizontal portion to which the rails are fixed. The vertical portion is provided with downwardly facing teeth which are inserted in pocketlike outwardly pressed portions.

### SUMMARY OF THE INVENTION

The present invention has an object to overcome the foregoing problems by presenting a rack assembly which enables to distinguish the existence of brackets and to easily recognize such happenings as a touching of the rack by an operating device. The rack assembly according to the invention furthermore shall enable to be more flexible in different modification, of construction.

According to the invention there is suggested a longitudinal strengthening groove formed in the outer plate portion of a post, with long engagement holes in the vicinity of said strengthening groove.

Engaging projections are formed in brackets being insertable into each engaging hole from the front side, and locking pawls project downwardly from each engaging projection in order to engage with the lower edge of said engaging holes (27A, 27B) when each engaging projection is inserted into respective engaging hole.

Furthermore there are provided slip-off preventing holes laterally in each support post, and corresponding slip-off preventing projections are formed on each bracket in order to fit in laterally with corresponding slip-off preventing holes when said engaging projections are engaged with said engaging holes.

Each bracket and bracket rail are coloured differently from the support posts.

According to the invention there are used especially formed brackets having projections to be inserted into holes provided in the posts. The shape of an upright portion of said bracket is adapted to the shape of the post to come into an intimate contact thereto, whereas the horizontal portion of said bracket is bearing the rails. This special form allows the operator to build up a rack assembly in different variations especially due to the fact that the place of fixing the bracket to the post defines the height of only the rail fixed to said bracket, whereas in the prior art it is only possible to have the rails at the same height on both sides of the post.

Preferred embodiments are described in the subclaims.

### BRIEF DESCRIPTION Of THE DRAWINGS

FIG. 1 is a fragmentary exploded view in perspective of a rack assembly representing one embodiment of the invention;
FIGS. 2 and 3 are, respectively, a front view and a plan view showing the portions shown in FIG. 1 in assembled condition;
FIGS. 4 and 5 are, respectively, a front view and a side view which are explanatory of a strain caused when a load is applied to the rack assembly shown in FIG. 1;
FIG. 6 is a general perspective view of the rack assembly shown in FIG. 1;
FIG. 7 is a fragmentary exploded view in perspective of a rack assembly representing an embodiment in which the strengthening groove of the posts are omitted;

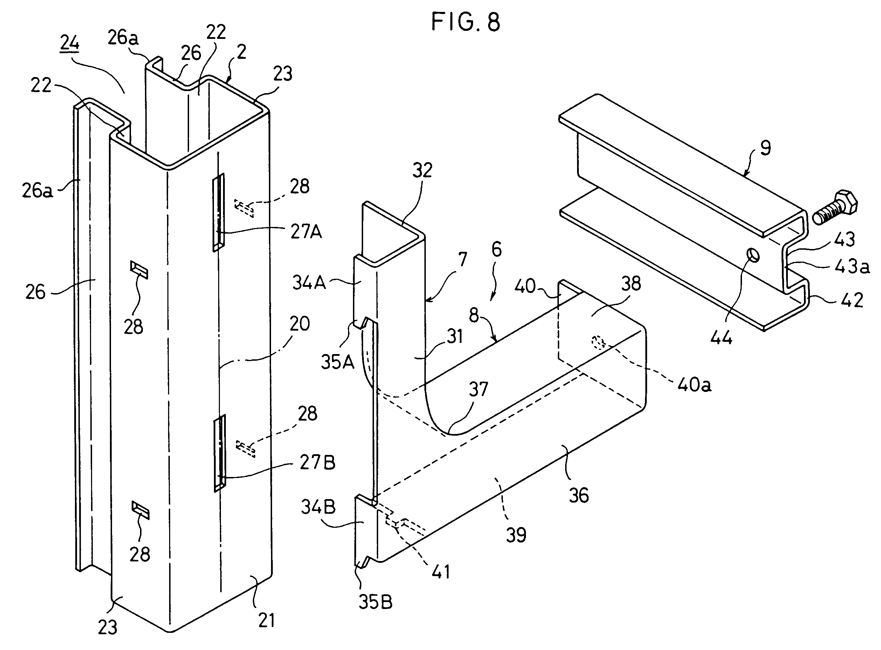

FIG. 8 is a fragmentary exploded view in perspective of a rack assembly representing a further embodiment, also showing posts without strengthening groove;

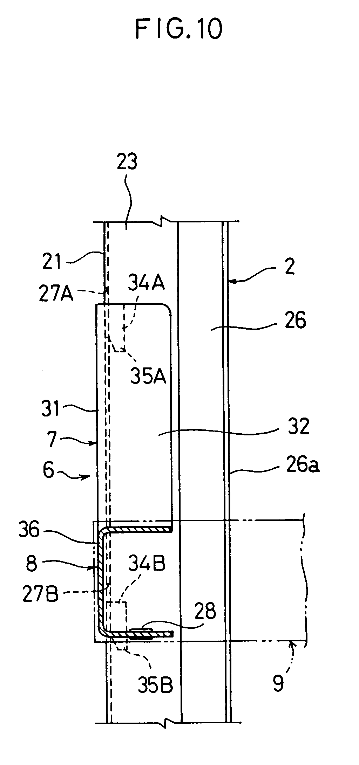

FIGS. 9, 10, and 11 are, respectively, a front view, a side view, and a plan view showing the portions shown in FIG. 8 in assembled condition;
FIG. 12 is a plan view showing portions of the rack assembly shown in FIGS. 8 to 11 in the course of being assembled together;
FIG. 13 is a fragmentary exploded view in perspective of a rack assembly representing a still further embodiment of the invention;
FIGS. 14 to 17 are, respectively, a front view and a side view showing portions of the rack assembly shown in FIG. 13 in assembled condition, and a front view and a plan view showing other portions of the rack assembly in assembled condition;
FIG. 18 is a plan view of a somewhat larger portion of the rack assembly shown in FIGS. 13 to 16;
FIG. 19 is a fragmentary exploded view in perspective of a rack assembly representing another embodiment of the invention;
FIG. 20 is a fragmentary sectional view of a bracket rail in the rack assembly shown in FIG. 19;
FIG. 21 is a general perspective view of the rack assembly shown is FIG. 20.

### DESCRIPTION OF THE PREFERRED EMBODIMENTS

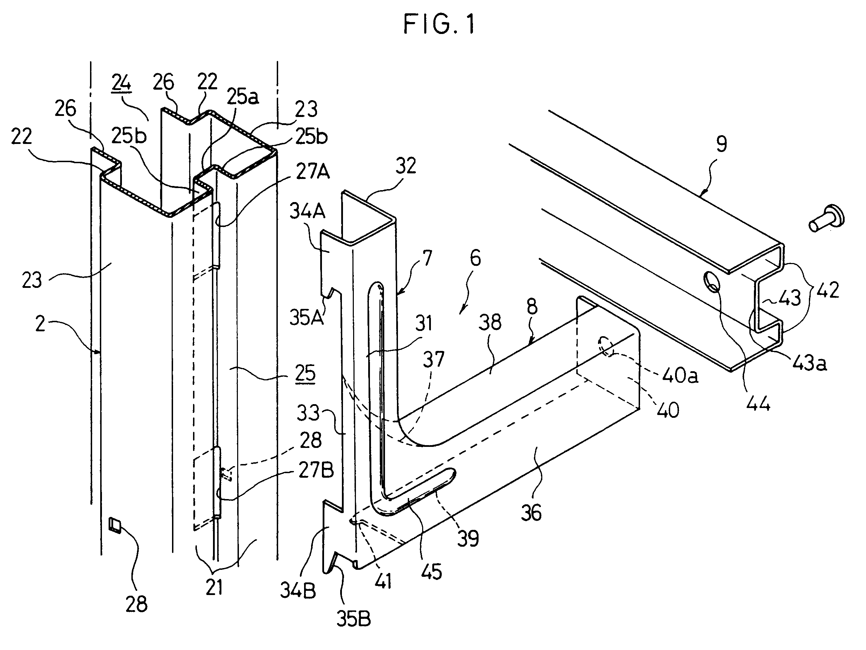

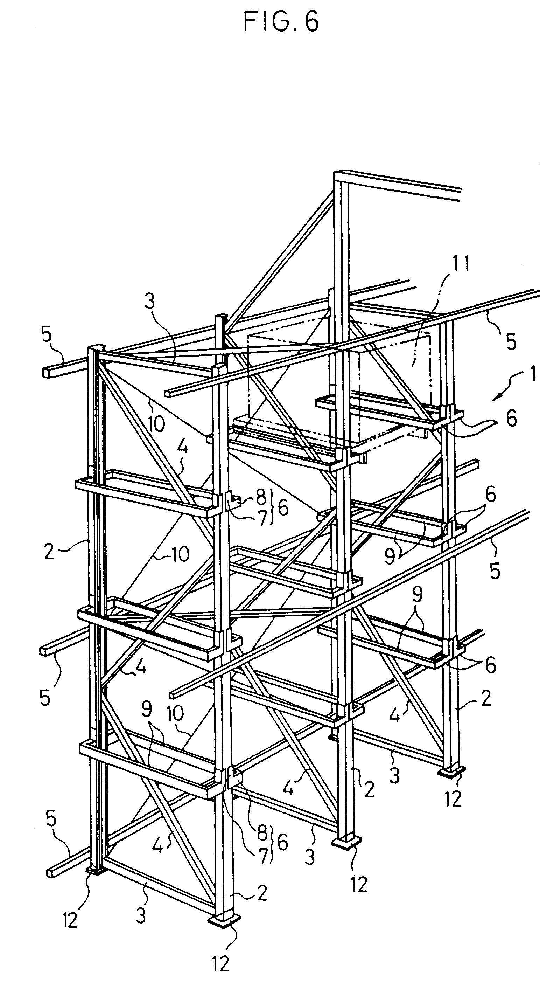

One embodiment of the invention will now be described with reference to FIGS. 1 through 5.
As FIG. 6 shows, a rack 1 has vertically extending support posts 2 spaced apart depthwise and longitudinally of the rack 1.
Adjacent support posts 2 disposed depthwise of the rack 1 are connected together at their respective upper and lower ends by horizontals 3, and they are also connected by a plurality of bracings 4. In this way, each pair of support posts, front and rear, are securely connected. Support posts 2 disposed transversely of the rack 1 are connected by transversely extending horizontal beams 5 bolted in position at the front and rear sides of the rack 1.

Each support post 2 had brackets 6 removably attached thereto which project horizontally toward transversely spaced adjacent support posts 2. Each bracket 6 comprises a connecting member 7 fitted to the support post 2 and a bracket member 8 continued to the connecting member 7. Respective bracket members 8 of each two adjacent support posts 2 spaced apart depthwise of the rack 1 are connected at their distal ends by a bracket rail 9 supporting goods 11 at the lower end thereof. Adjacent support posts 2 at the rear side of the rack 1 are connected, at diagonally opposed joints between respective support posts 2 and horizontal beams 5, by a diagonally extending reinforcing bracing 10. A seating member 12 is secured to the lower end of each support post 2.
As FIGS. 1 to 3 show, each support post 2 comprises outer and inner plate portions 21, 22 formed in opposed relation and a pair of side plate portions 23, the inner plate portion 22 being centrally formed with a longitudinally extending slit 24. A longitudinally extending strengthening groove 25 is formed in the outer plate portion 21 at a location opposite to the slit 24.
The inner plate portion 22 is formed with a pair of connecting plate portions 26 bent 90° outwardly from opposite edges of the slit 24 and extending in parallel along the slit 24. Ends of horizontals 3 and bracings 4 are fitted in the space between the connecting plate portions 26 and fixed in position by rivets or the like.

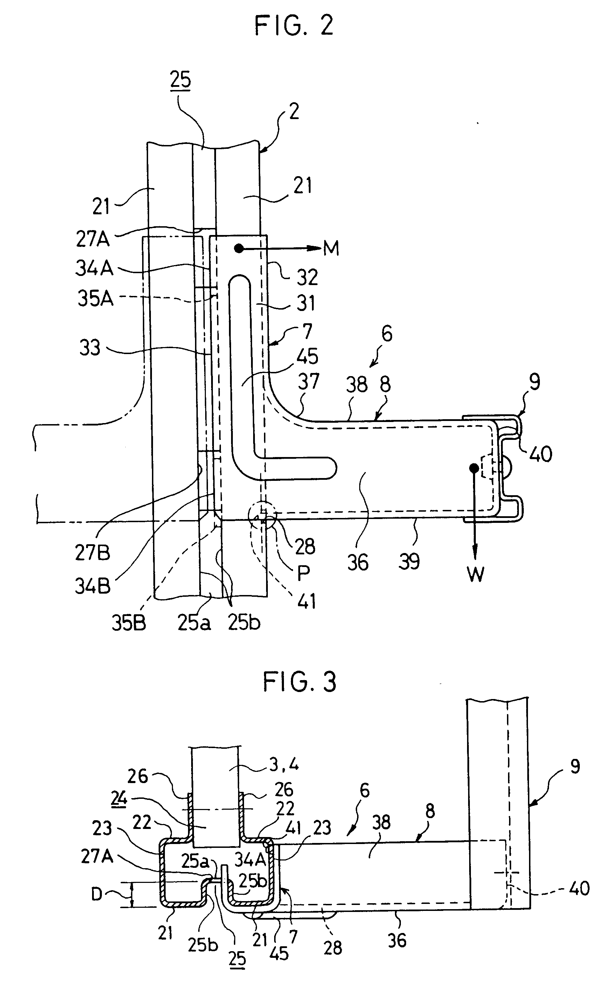

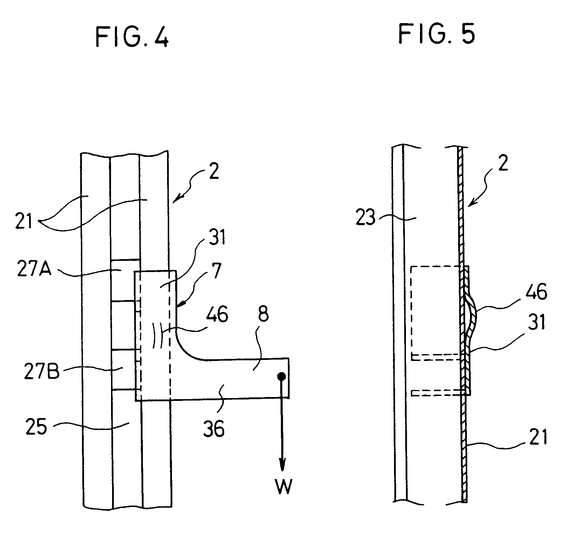

The strengthening groove 25 has a depth D and comprises a bottom plate 25a and side plates 25b, 25b. Corner portions defined by the bottom plate 25a and side plates 25b, as well as corner portions defined by the side plates 25b and outer plate portion 21, are bent at right angles. The bottom plate 25a of the strengthening groove 25 is formed with a pair of engagement holes 27A, 27B, upper and lower, across the full width of the bottom plate 25a and in spaced apart relation. The side plate portions 23 are formed with a slip-off preventing hole centrally at a location corresponding to the lower engagement hole 27B.
The connecting member 7 and bracket member 8 of each bracket 6 are integrally formed by pressing into an L shape. The connecting member 7 has a front plate portion 31 abuttable to one side of the outer plate portion 21 of each support post 2, a side plate portion 32 bent 90° from the front plate portion 31 and abuttable to one side plate portion 23 of the support post 23, and a locking plate portion 33 bent rectangularly at the edge of the front plate portion 31 toward the support post 2 and whose inner side is abuttable to one side plate 25b of the strengthening groove 25. The locking plate portion 33 has, at upper and lower ends thereof, engaging projections 34A, 34B integrally formed therewith by pressing or otherwise which are insertable into the engagement holes 27A, 27B. The engaging projections 34A, 34B are formed at their respective lower ends with locking pawls 35A, 35B adapted to be locked to the rear surface of the respective bottom plates 25a of the engagement holes 27A, 27B.
Each bracket member 8 includes a front plate 36 continued evenly from the lower end of front plate portion 31 of the connecting member 7, an upper plate 38 continued from the side plate portion 32 of the connecting member 7 through a curved portion 37, and a lower plate 39 bent 90° rearward along the lower end of the front plate 36 so that it has a channel shaped section. The bracket member 8 is provided at its front end with an end plate 40 having a connecting hole 40a. The proximal end of the lower plate 39 which abuts one side plate portion 23 of the support post 2 when the rack is assembled into shape is formed with a slip-off preventing projection 41 engageable with the slip-off prevention hole 28.
A strengthening raised portion 45 having an L shape as viewed in front elevation is formed by pressing on a combination of the front plate portion 31 of the connecting member 7 and the front plate 36 of the bracket member 8. This strengthening raised portion 45 prevents a strain 46 from being caused to the front plate portion 31 as shown in FIGS. 4 and 5 when a large load W is applied to the front end portion of the bracket member 8 as shown in FIG. 2.
To mount the bracket 6 to the support post 2, the engaging projections 34A,348 of the bracket 6 are inserted into the corresponding engagement holes 27A, 27B from the position shown by solid line in FIG. 1 (in which case the slip-off preventing projection 41 is in abutment with one side plate portion 23 at a level above the slip-off preventing hole 41 through elastic deformation of the connecting member 7), then the bracket 6 is moved downward. The engaging pawls 35A, 35B are locked to the rear surface of the bottom plate 25a at positions below the engagement holes 27A,270, and the slip-off preventing projection 41 is fitted in the slip-off preventing hole 28. In this manner the bracket 6 can be easily and securely fixed to the support post 6.
Each bracket rail 9 has a channel-like configuration with a longitudinally extending groove portion 43 formed centrally of a connecting face 42, and is adapted to receive the front end of the bracket member 8 into a recessed portion thereof. A rivet or bolt is fitted into a connecting hole 44 formed in a bottom plate 43a of the groove portion 43 and into a connecting hole 40a of the end plate 40, whereby the bracket rail 9 is fixedly connected to the bracket member 8.

According to the above described arrangement, a load W applied to the front end of the bracket 6 via the bracket rail because of goods 11 forms a turning moment M about point P at the proximal end of the bracket member 8 as shown in FIG. 2 thereby to urge the top portion of the connecting member 7 in the direction of the turning moment M. However, the connecting member 7 can positively sustain the moment M since it holds a raised portion of the support post 2 consisting of the outer plate portion 21, side plate portions 23, and side plates 25b of the groove portion 25, in position through effective utilization of the depth D of the strengthening groove 25 and by means of the side plate portions 32, locking plate portion 33, and engaging projections 34A, 34B, and thus it can withstand a large load W. Furthermore, the strengthening raised portion 45 formed in continuation of the front plate portion 31 and front plate 36 serves to prevent a strain which may otherwise be caused to the front plate portion 31 by load W. In addition, since the slip-off preventing projection 41 engages the slip-off preventing hole 28, the bracket 6 will never become disengaged from the support post 2, even if any vibration due to incoming and outgoing movement of goods II is transmitted to the bracket 6.

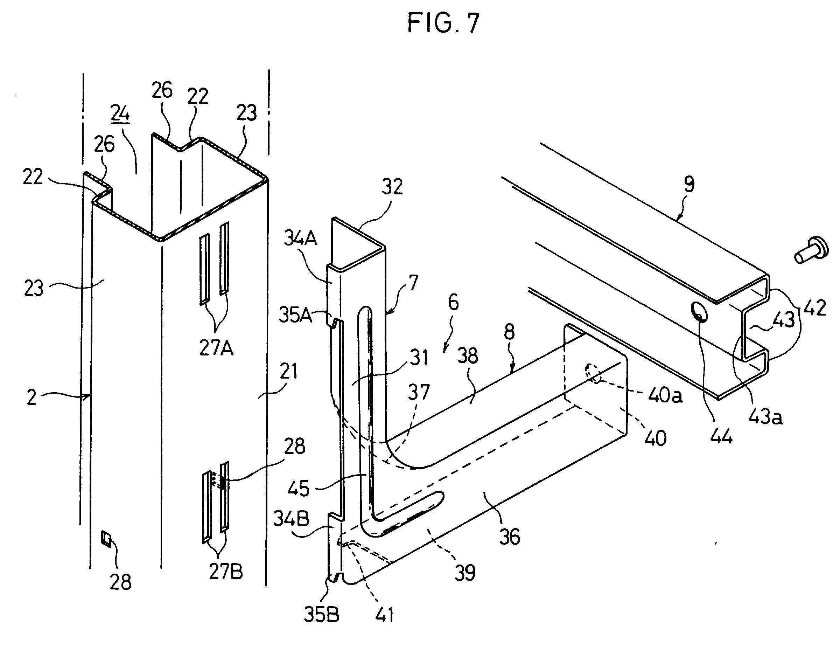

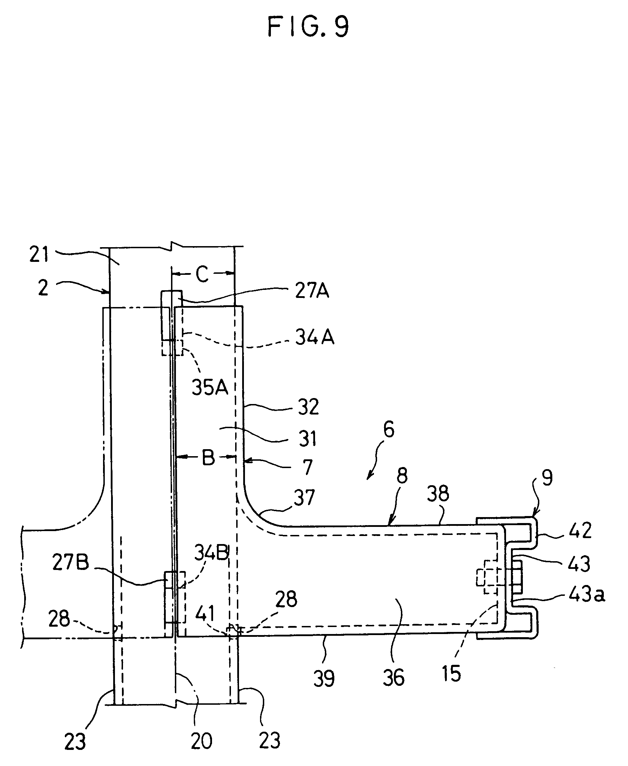

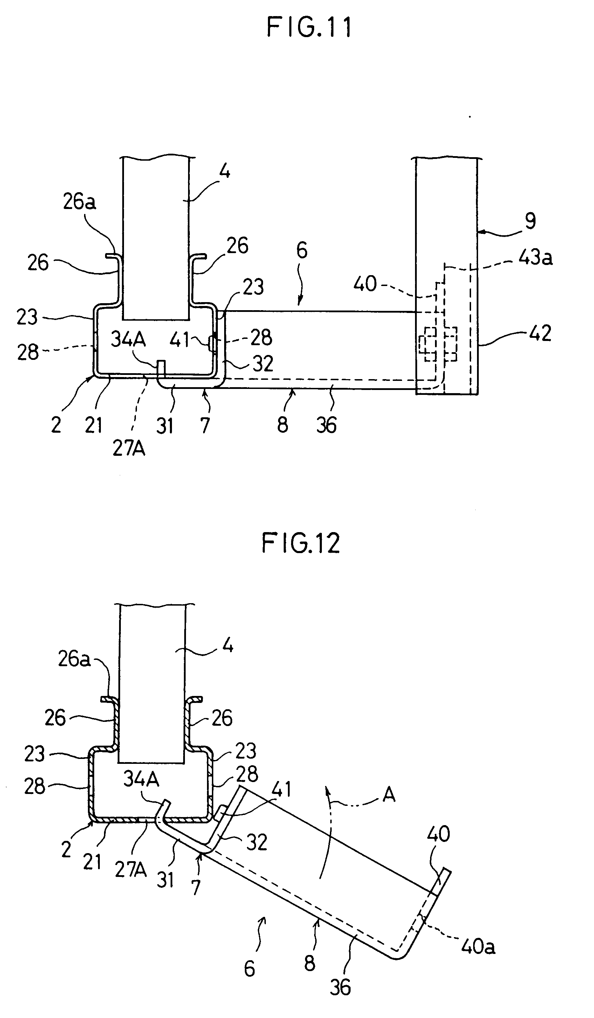

FIG. 7 shows another embodiment in which the strengthening groove according to the invention has been omitted. In this embodiment, each support post 2 has no strengthening groove 25 provided therein, and instead engagement holes 27A, 27B are formed centrally in the outer plate portion 21 of the support post 2.
Therefore, the locking plate portion 33 is eliminated from the connecting member 7, and the engaging projections 34A, 34B are bent directly from the front plate portion 31. In this case, the strengthening raised portion 45 exhibits greater strengthening effect inasmuch as the front plate portion 31 is not strengthened by the locking plate portion 33 and thus the front plate portion 31 can be prevented from possible strain as well.
FIGS, 8 through 12 illustrate a further embodiment also without strengthening groove. In this embodiment the construction of each support post 2 in particular is different from that of the embodiment shown in FIG. 7. More specifically, the outer plate portion 21 has a flat configuration as in the FIG. 7 embodiment, and is formed with upper and lower engagement holes 27A, 27B, one each, on a center line 20 thereof. The height of each engagement hole 27A, 27B is so fixed that engaging projections 34A, 34B can be respectively received therein, and its width is so fixed that two engaging projections can be received therein. For each support post 2 located at one end of the rack 1, the width of the engagement hole may be just sufficient to receive one engaging projection. In each support post 2, the connecting plate portions 26 are each formed at its front end with a flange 26a.
According to such arrangement, to assemble the rack 1 into shape, brackets 6 are first mounted to each support post 2. As FIG. 12 shows, the lower projection 34B is brought into engagement with the corresponding engagement hole 27B while the bracket 6 is held in tilted condition, and then the bracket 6 is erected up to allow the upper engaging projecting 34A to engage the engagement hole 34B. Thus, the bracket 6 is put in position ready for attachment to the support post 2 with an inclination of 15 to 30° relative to the support post 2, as shown.
Subsequently, the bracket 8 is lowered to allow the locking pawls 35A, 35B to be locked to the lower edge of the engagement holes 27A, 27B, whereby the slip-off preventing hole 28 and the slip-off preventing projection 41 are levelled. Then, the bracket 6 is pivotally moved about proximate positions for engagement of the engagement holes 27A, 27B with the locking pawls 35A, 35B as shown by arrow A in FIG. 12. Thereupon, the projection 41 is received in the slip-off preventing hole 38, and the side plate portion 32 goes into abutment with the side plate portion 23, so that bracket 6 mounting is completed. In this case, as FIG. 9 shows, the abutting width B of the front plate portion 31 of the bracket 6 is almost equal to the widthwise distance C from the edge of the outer plate portion 21 to the center line 20, and therefore the bracket 6 can be securely mounted in position.

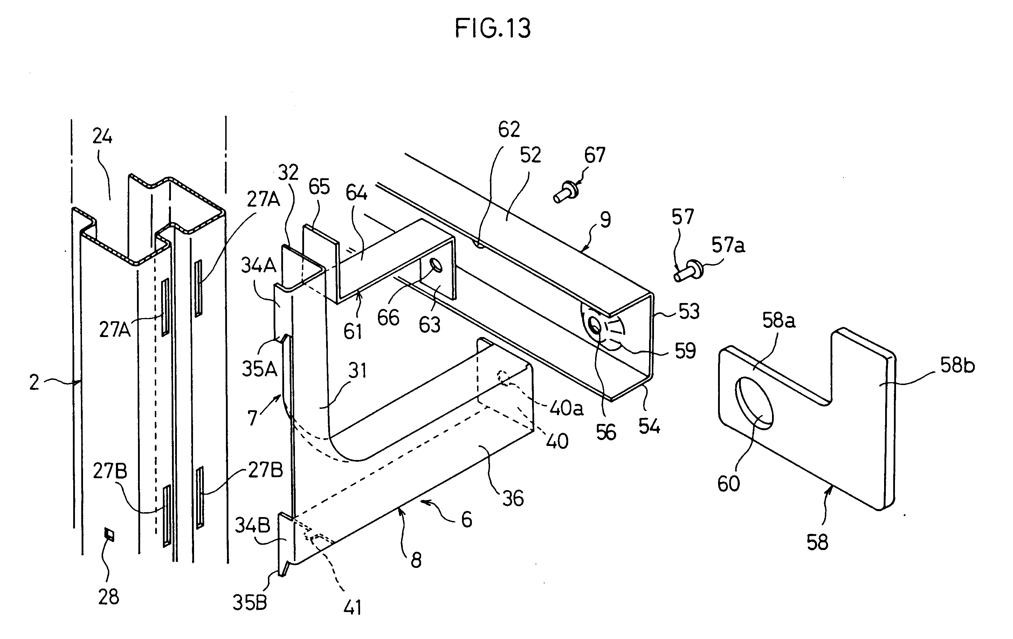

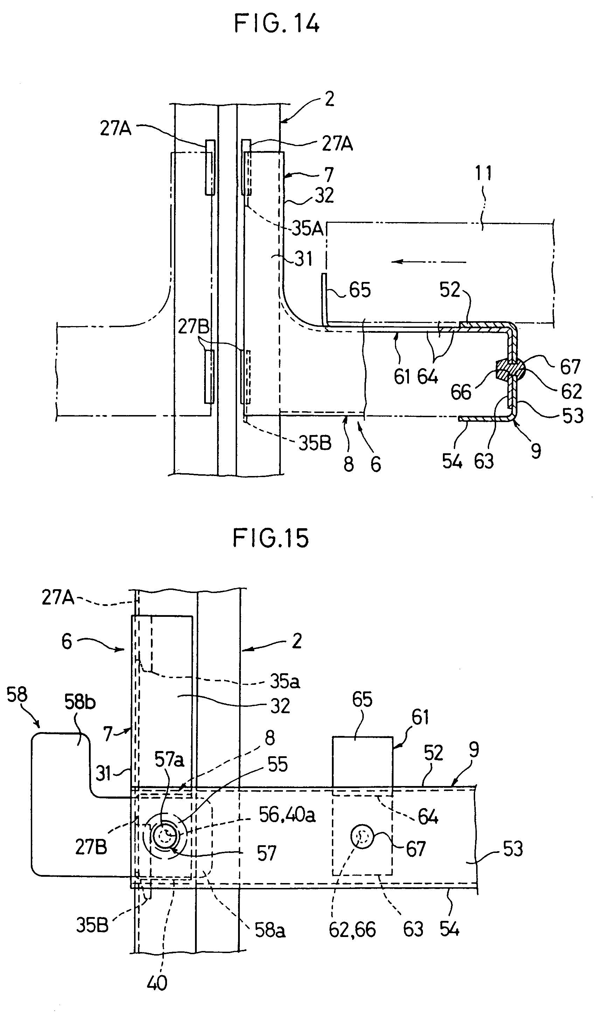

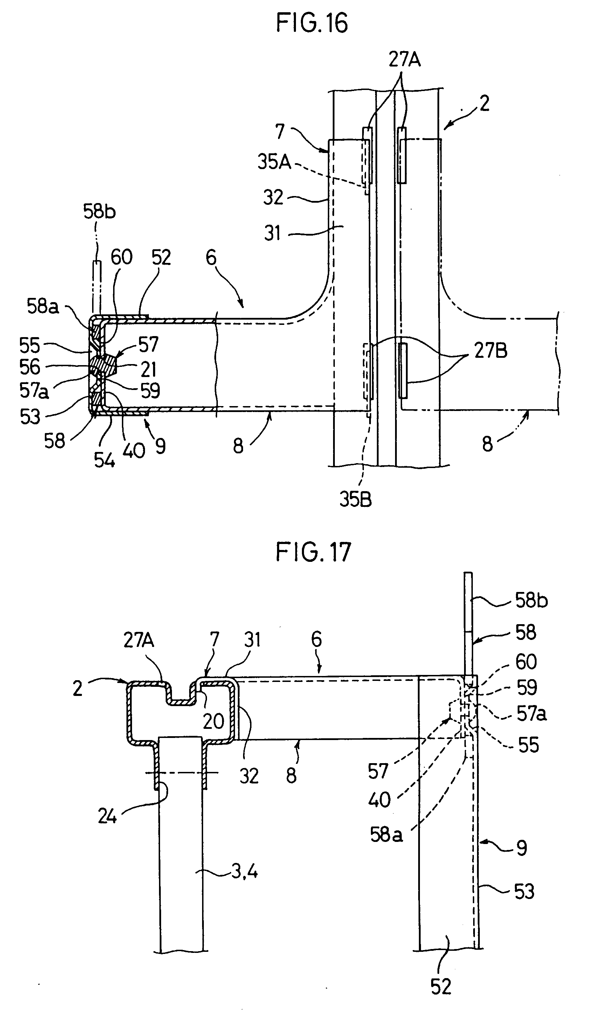

FIGS. 13 to 18 illustrate a still further embodiment of the invention.

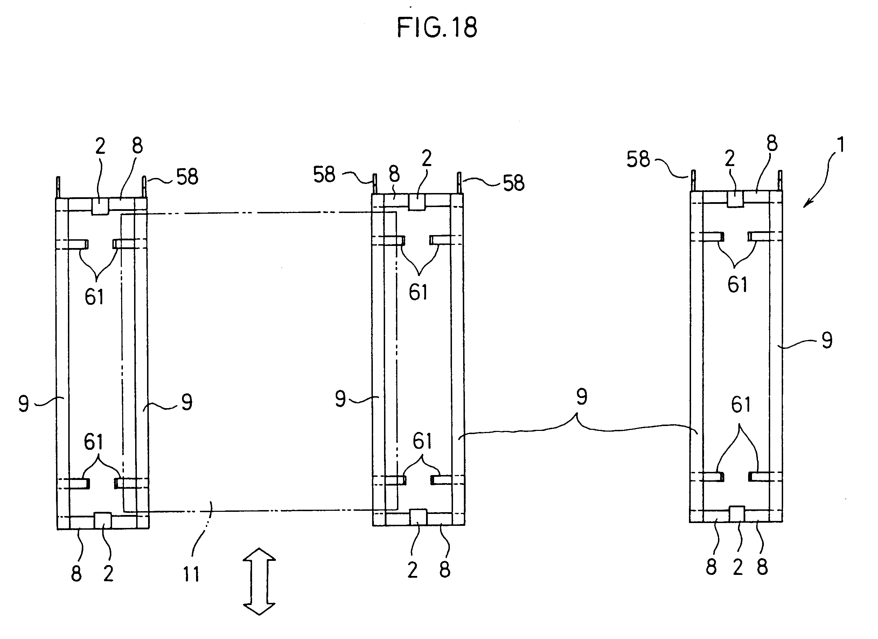

In these drawings, the bracket rail 9 has an upper plate 52, a side plate 53, and a lower plate 54, so that it is channel-shaped in section and fittable on the front end portion of the bracket member 8. The side plate 43 is formed at a specified location with a round shaped recessed portion 55 having a through-hole 56 formed centrally thereof which is adapted to match a connecting hole 40a. The holes 40a, 56 are fixedly connected by a rivet 57 or bolt after they are allowed to match each other, in which case a head 57a of the rivet 57 is fitted in the recessed portion 55. The bracket rail 9 can be fabricated by passing a hoop formed with a recessed portion 55 and a through-hole 56 through a conventional roll mill for channel section material forming. It may be obtained in various sizes by effecting positional changes with respect to the mold.
As FIG. 6 shows, the rack 1 can store goods 11 therein in a plurality of tiers. As shown in FIG. 13, a topmost one of the bracket rails 9 which usually has no brace 10 is provided at the rear end thereof with an upwardly extending stopper member 58 which is fixed by a rivet 57. The stopper member 58 is of an I-shaped plate form and has a connecting plate portion 58a insertable into the bracket rail 9, and a stopper plate portion 58b projecting upward at the rear end of the bracket rail 9. As already stated, the side plate 53 of each bracket rail is formed with a recessed portion 55, which in turn forms an inwardly raised round protrusion 59. The connecting plate portion 58a is formed with a mounting hole 60 fittable on the round protrusion 59. The thickness of the connecting plate portion 58a is equal or about equal to the thickness of the round protrusion 59.
Therefore, the mounting hole 60 is set so as to be ready for receiving the round protrusion 59 before coupling by the rivet 57, whereby the stopper member 58 can easily by fixed to the rear end of the bracket rail 9 through coupling by the rivet 57.
In the case of such construction, coupling of each bracket 8 and the associated bracket rail 9 is made through rivet 57 at the fabricating factory, in which case the stopper member 58 is set in position. For each pair of support posts 2 integrally connected depthwise of the rack through horizontals 3 and bracings 4, engaging projections 34A, 34B of associated brackets 8 are brought in engagement with engagement holes 27A, 27B of the support posts 2, whereby a temporary rack assembly is made. Such temporary rack structures are stacked one over another, which are transported together with horizontal beams 5 and braces 10 for assembly into a complete rack at the erection site.
In an automatic warehousing facility, loading and unloading of goods 11 (pallets) onto and from the rack assembly 1 constructed in manner as above described are carried out by suitable handling means and/or a forklift. For this purpose, loading of incoming goods is carried out in such condition that goods 11 are prevented from contacting the stopper member 58 as shown by phantom lines in FIG. 18. In the event that the goods 11 should be moved off position depthwise of the rack on account of mishandling, earthquake or otherwise, the goods 11 would come in contact with the stopper member 58.
In the above described embodiment, a stopper member 58 is provided in each topmost bracket rail 9 which has no brace 10.
Alternatively, the stopper member 58 may be provided in a lower bracket rail 9.

A laterally extending stopper member 61 is attached to each bracket rail 9 at a mid-point of the length thereof (as viewed depthwise of the rack). More particularly, the side plate 53 of the bracket rail 9 is formed with mounting holes 62, one located slightly inward of the front end of the bracket rail 9 and the other located slightly before the rear end thereof. The stopper member 61 is of a bent plate shape and comprises a connecting plate portion 63 insertable into the bracket rail 9, an arm plate portion 64 bent rectangularly outward from the upper end of the connecting plate portion 63, and a stopper plate portion 65 rectangularly upward from a free end of the arm plate portion 64.
The connecting plate portion 63 is formed with a mounting hole 66 registerable with the mounting hole 62. Therefore, the stopper member 61 can be fixedly connected to the bracket rail 9 by driving a rivet 67 (one example of connecting means, which may alternatively be a bolt and a nut; or such connection may take the form of welding) into the mounting holes 62,66 when the two holes are registered with each other.
In the case of such construction, at the fabricating factory the bracket 8 and the bracket rail 9 are connected to each other by means of the rivet 57 and, at same time, the laterally extending stopper member 61 is coupled to the the bracket rail by means of the rivet 67.
Loading and unloading of goods 11 onto and from rack provided with such stopper member 61 are also carried out by suitable handling means or a forklift as earlier stated. For the purpose of storing incoming goods, arrangement is made for preventing the goods from contacting the stopper member 61; but in the event that the goods 11 should be moved laterally on account of earthquake or otherwise, the goods are stopped by the stopper plate portion 65 of the stopper member 61.

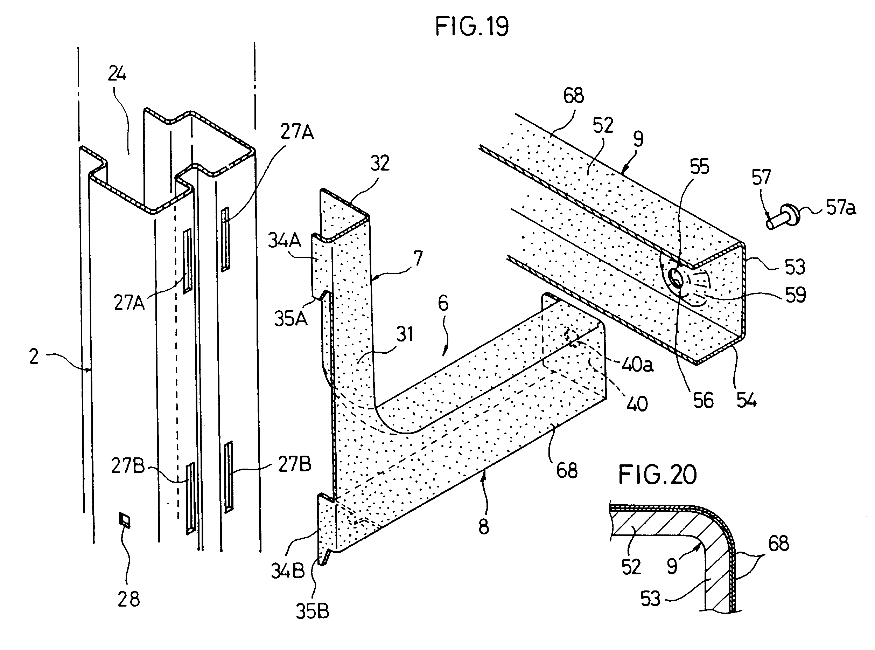

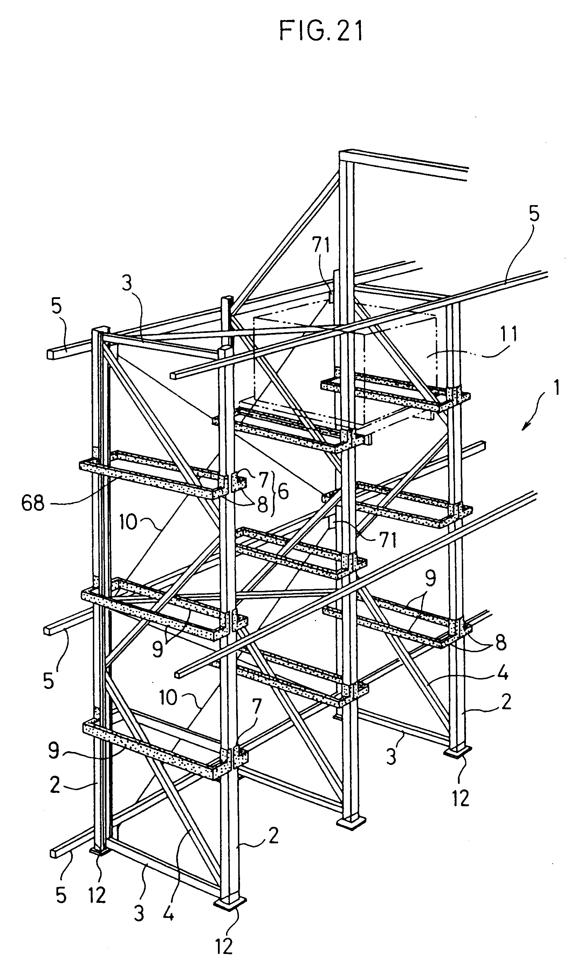

FIGS. 19 to 21 illustrate another embodiment of the invention. As shown in the drawings, the bracket rail 9 and bracket 8 are differently colored from the support post 2 with respect to their entire outer surface. Such distinction in color may he effected by fabricating the bracket rail 9 and the bracket 8 by using such material as is different from that of the support post 2, or by applying two coats of a paint 68 as shown in FIG. 20. The paint may be applied in one coat, or three or more coats. For the paint, a rust preventive paint may he used.

According to such arrangement, bracket rails 9 and brackets 8 can be distinctly relieved against support posts 2, etc., whereby the size or number or tiers of the rack 1 can easily be recognized. Any off-position of stored goods 11 can readily be found out. Also, the fork of the forklift truck can be easily and accurately levelled to position. When the fork contacts the bracket rail 9, the paint 68 will come off, so that the base material of the bracket rail 9, or an inner layer paint of a different color may be exposed. Thus, it is possible to know that such contact has occurred. In the foregoing embodiment, both the bracket rail 9 and the bracket 8 are differently colored from the support post 2. Alternatively, the bracket rail 9 only may be differently colored.

## Claims

1. A rack assembly (1) including
vertically extending support posts (2) disposed at least at four corners of the assembly,
brackets (6) disposed on transversely adjacent support posts (2) at opposed positions such that the brackets (6) on each of the support posts (2) project toward the other support post,
a bracket rail (9) extending between adjacent brackets (6) located depthwise of the rack assembly (1) and capable of supporting goods placed in the rack assembly;
said support posts (2) each having a depthwise outwardly facing outer plate portion (21),
a pair of side plate portions (23) continued to opposite side edges of the outer plate portion (21),
said brackets (6) each having a connecting member (7) connectable to said support post (2),
and a bracket member (8) formed in continuation to said connecting member (7) and to which said bracket rail (9) is connectable;
said connecting member (7) having a side plate portion (32) abuttable against one side plate portion (23) of said support post (2),
and a front plate portion (31) abuttable against the outer plate portion (21) of said support post (2),
said rack assembly (2) comprises a plurality of vertically arranged holding means formed at predetermined distances in said outer plate portion (21),
and engagement projections (34A, 34B) are provided at the connecting member (7) to fix the connecting member to the post (2)
characterized in that
a strengthening groove (25) is formed in the outer plate portion (21) of said post (2) longitudinally thereof;
the holding means are long engagement holes (27A, 27B) in the vicinity of said strengthening groove (25),
said engaging projections (34A, 34B) are formed in continuation to the end portion (31) of said front plate portion perpendicularly to said outer plate portion (21), being insertable into each engaging hole (27A, 27B) respectively from the front side of said outer plate portion (21),
locking pawls (35A, 35B) project downwardly from each engaging projection (34A, 34B) in order to engage with the lower edge of said engaging holes (27A, 27B) when each engaging projection is inserted into respective engaging hole,
slip-off preventing holes (28) are formed in said side plate portions (23) of each support post (2),
slip-off preventing projections (41) are formed on each bracket (6) in order to fit in laterally with corresponding slip-off preventing holes (28) when said engaging projections (34A, 34B) are engaged with said engaging holes (27A, 27B) from the front side of said outer plate portion (21),
and that each bracket (6) and bracket rail (9) are coloured differently from the support posts (2).

2. A rack assembly as set forth in claim 1, characterized in that said bracket rail (9) is channel-shaped in section and fittable over the front end portion of a corresponding bracket (6) and said rack assembly further comprises a connecting hole (40a) formed in a front end portion (40) of each bracket (6), a round recessed portion formed in each of said bracket rails (9), a through-hole (44) formed in said recessed portion and registerable with said connecting hole (40a), and an upward stopper member (58) arranged at the rear end of each bracket rail (9) depthwise of said assembly and fitting over said round recessed portion, whereby said stopper member (58) is securely fixed between the front end portion of said bracket and said channel-shaped bracket rail (9).

3. A rack assembly as set forth in claim 2, characterized in that said assembly has a widthwise stopper member (61) mounted intermediate the length of each said bracket rail (9).

## Patentansprüche

1. Regalanordnung (1) mit
sich vertikal erstreckenden Lagerpfosten, die an zumindest vier Ecken der Anordnung vorgesehen sind,
Konsolen (6), die an quer benachbarten Lagerpfosten (2) in gegenüberliegenden Positionen angeordnet sind derart, daß die Konsolen (6) an jedem der Lagerpfosten (2) in Richtung zum anderen Lagerpfosten weisen,
einer Konsolenschiene (9), die sich zwischen benachbarten Konsolen (6) erstreckt und in die Tiefe des Regals (1) angeordnet ist und in der Lage ist, die auf dem Regal angeordneten Waren zu lagern,
wobei die Lagerpfosten (2) jeweils einen vertieften nach außen weisenden äußeren Plattenabschnitt (21) aufweisen,
ein Paar Seitenklappenabschlüsse (23), die auf gegenüberliegenden Seitenbändern des äußeren Plattenabschnittes (21) weiterführen,
wobei die Konsolen (6) jeweils Verbindungsteile (7) aufweisen, die mit dem Lagerpfosten (2) verbindbar sind,
und wobei ein Konsolenteil (8) in Fortführung mit dem Verbindungsteil (7) ausgebildet ist, mit dem die Konsolenschiene (9) verbindbar ist,
wobei das Verbindungsteil (7) einen Seitenplattenabschnitt (32) aufweist, der gegen einen der Seitenplattenabschlüsse (23) des Lagerpfostens (2) in Anlage kommt,
und einen Frontplattenabschnitt (31), der gegen den äußeren Plattenabschnitt (21) des Lagerpfostens (2) in Anlage kommt,
wobei die Regalanordnung (2) eine Vielzahl von vertikal angeordneten Haltevorrichtungen aufweist, die in vorgegebenen Abständen an dem äußeren Plattenabschnitt (21) ausgebildet sind,
und Berührungsvorsprünge (34A, 34B) an den Verbindungsteilen (7) vorgesehen sind, um das Verbindungsteil mit dem Pfosten (2) zu verbinden,
dadurch gekennzeichnet, daß
eine Verstärkungsrille (25) in dem äußeren Plattenabschnitt (21) des Pfostens (2) in Längsrichtung ausgebildet ist,
die Haltevorrichtungen lange Eingriffslöcher (27A, 27B) in der Nähe der Verstärkungsrille (25) sind,
wobei die Eingriffsvorsprünge (34A, 34B) in Verlängerung mit den Endabschnitten (31) des Frontplattenabschnittes senkrecht zu dem äußeren Plattenabschnitt (21) ausgebildet sind und in die jeweiligen Eingriffslöcher (27A, 27B) von der Frontseite des äußeren Plattenabschnittes (21) eingeführt werden können,
Schließklauen (35A, 35B) nach unten vor den Eingriffsvorsprüngen (34A, 34B) weisen, um mit dem unteren Rand der Eingriffslöcher (27A, 27B) in Eingriff zu kommen, wenn jeder Eingriffsvorsprung in die jeweiligen Eingriffslöcher eingeführt ist,
Löcher (28) zum Verhindern des Weggleitens in den Seitenplattenabschnitten (23) jeden Lagerpfostens (2) ausgebildet sind,
Vorsprünge (41) zum Verhindern des Weggleitens in jeder Konsole (6) ausgebildet sind, um seitlich mit den entsprechenden Löchern (28) zum Verhindern des Weggleitens zusammenzuwirken, wenn die Eingriffsvorsprünge (34A, 34B) mit den Eingriffslöchern (27A, 27B) von der Frontseite des äußeren Plattenabschnittes (21) in Eingriff sind,
und jede Konsole (6) und jede Konsolenschiene (9) unterschiedlich von den Lagerpfosten (2) gefärbt sind.

2. Regalvorrichtung nach Anspruch 1, dadurch gekennzeichnet, daß die Konsolenschiene (9) im Querschnitt kanalförmig ausgebildet ist und über den vorderen Endabschnitt einer entsprechenden Konsole (6) gepaßt werden kann, und daß die Regalanordnung weiterhin ein Verbindungsloch (40A) in einem vorderen Endabschnitt (40) einer jeden Konsole (6) ausweist, ein runder ausgenommener Abschnitt in jeder der Konsolenschiene (9) ausgebildet ist, eine Durchgangsöffnung (44) in dem ausgenommenen Abschnitt ausgebildet ist und mit dem Verbindungsloch (40A) übereinstimmt, und ein hervorstehendes Anschlagteil (58) am hinteren Ende einer jeden Konsolenschiene (9) in der Tiefe des Regals passend über den runden ausgenommenen Abschnitt vorgesehen ist, wodurch das Anschlagteil (58) sicher zwischen dem vorderen Endabschnitt der Konsole und der kanalförmigen Konsolenschiene (9) befestigt ist.

3. Regalanordnung nach Anspruch 2, dadurch gekennzeichnet, daß die Anordnung in Richtung der Breite ein Anschlagteil (61), das zwischen der Länge jeder Konsolenschiene (9) angeordnet ist, aufweist.

## Revendications

1. Ensemble de casier (1) comprenant
des montants de support (2) s'étendant verticalement, disposés au moins aux quatre coins de l'ensemble,
des attaches (6) disposées sur des montants de support (2) voisins en direction transversale, dans des positions opposées telles que les attaches (6) sur chacun des montants de support (2) fassent saillie vers l'autre montant de support,
une traverse de support (9) s'étendant entre des attaches (6) voisines, montée dans le sens de la profondeur de l'ensemble de casier (1) et capable de supporter des marchandises placées dans l'ensemble de casier,
lesdits montants de support (2) comportant chacun une partie externe en plaque (21) faisant face vers l'extérieur dans le sens de la profondeur,
une paire de parties latérales en plaque (23) faisant suite aux bords latéraux opposés de la partie externe en plaque (21),
lesdites attaches (6) comportant chacune un élément d'assemblage (7) qui peut être raccordé audit montant de support (2), et
un élément de support (8) formé à la suite dudit élément d'assemblage (7) et auquel ladite traverse de support (9) peut être raccordée,
ledit élément d'assemblage (7) comportant une partie latérale en plaque (32) qui peut s'appuyer contre une partie latérale en plaque (23) dudit montant de support (2), et
une partie frontale en plaque (31) qui peut s'appuyer contre la partie externe en plaque (21) dudit montant de support (2),
ledit montant de support (2) comportant plusieurs moyens de retenue disposés verticalement, formés à intervalles prédéterminés dans ladite partie externe en plaque (21), et
des saillies de mise en prise (34A,34B) étant prévues sur l'élément d'assemblage (7) pour fixer cet élément au montant (2),
caractérisé en ce que
une rainure de renforcement (25) est formée dans la partie externe en plaque (21) dudit montant (2), dans la direction longitudinale de celui-ci,
les moyens de retenue sont des trous oblongs d'insertion (27A,27B) au voisinage de ladite rainure de renforcement (25),
lesdites saillies de mise en prise (34A,34B) sont formées à la suite de la partie d'extrémité (31) de ladite partie frontale en plaque, perpendiculairement à ladite partie externe en plaque (21), et peuvent être insérées respectivement dans lesdits trous d'insertion (27A,27B) par le côté avant de ladite partie externe en plaque (21),
des doigts de verrouillage (35A,35B) font saillie vers le bas sur chaque saillie de mise en prise (34A,34B) afin de venir en prise avec le bord inférieur desdits trous d'insertion (27A,27B) au moment où chaque saillie de mise en prise est insérée dans un trou d'insertion respectif,
des trous anti-glissement (28) sont formés dans lesdites parties latérales en plaque (23) de chaque montant de support (2),
des saillies anti-glissement (41) sont formées sur chaque attache (6) de manière à s'adapter en direction latérale dans des trous anti-glissement (28) correspondants lorsque lesdites saillies de mise en prise (34A,34B) sont insérées dans lesdits trous d'insertion (27A,27B) par le côté avant de ladite partie externe en plaque (21), et en ce que
chaque attache (6) et chaque traverse de support (9) est revêtue d'une couleur différente de celle des montants de support (2).

2. Ensemble de casier selon la revendication 1, caractérisé en ce que ladite traverse de support (9) est profilée en U et peut être adaptée sur la partie d'extrémité frontale d'une attache (6) correspondante, et ledit ensemble de casier présente un trou d'assemblage (40a) formé dans la partie d'extrémité frontale (40) de chaque attache (6), une partie en creux arrondie formée dans chacune desdites traverses de support (9), un trou traversant (44) formé dans ladite partie en creux et pouvant coïncider avec ledit trou d'assemblage (40a), et un élément d'arrêt vers le haut (58) disposé à l'extrémité arrière de chaque traverse de support (9) dans le sens de la profondeur dudit ensemble et s'adaptant sur ladite partie en creux arrondie, d'où il résulte que ledit élément d'arrêt (58) est fixé solidement entre la partie d'extrémité frontale de ladite attache et ladite traverse de support profilée en U (9).

3. Ensemble de casier selon la revendication 2, caractérisé en ce que ledit ensemble comporte un élément (61) d'arrêt dans le sens de la largeur, monté au niveau d'une région médiane de chacune desdites traverses de support (9).
